# FASCICULE DE BREVET EUROPEEN

(11) **EP 2 496 476 B1**
(45) Date de publication et mention de la délivrance du brevet: **04.01.2017**
(21) Numéro de dépôt: 10795423.2
(22) Date de dépôt: 05.11.2010
(51) Int. Cl.: B64D 45/00, B64C 1/14

(54) **PARTIE AVANT D'UN AERONEF COMPORTANT UN SAS D'ACCES AU COCKPIT.**
FLUGZEUGKABINE MIT SICHERHEITSSCHLEUSE ZUM COCKPIT
AIRCRAFT CABIN COMPRISING A FLIGHT DECK SECURITY SYSTEM

(30) Priorité: 06.11.2009 FR 0957881
(43) Date de publication de la demande: 12.09.2012
(73) Titulaire: Airbus, 31700 Blagnac (FR)
(72) Inventeur: PUJOL, Olivier, F-31530 Montaigut Sur Save (FR); LALANDE, Sébastien, F-31300 Toulouse (FR)
(74) Mandataire: Ilgart, Jean-Christophe
(86) Numéro de dépôt international: PCT/FR2010/052389
(87) Numéro de publication internationale: WO 2011/055097

(56) Documents cités:
- US-A- 3 811 643
- US-A1- 2003 006 342
- US-A1- 2003 136 878
- US-A1- 2003 169 184
- US-A1- 2005 116 098
- US-B1- 6 474 599

## Description

### DOMAINE TECHNIQUE

La présente invention porte sur le domaine général de la sûreté à bord des aéronefs et concerne plus particulièrement une partie avant de fuselage d'aéronef comportant un cockpit communiquant avec une cabine passagers par l'intermédiaire d'un sas de sécurité.

### ETAT DE LA TECHNIQUE ANTERIEURE

A la suite des événements du 11 septembre 2001, il est apparu nécessaire d'améliorer la sûreté à bord des aéronefs, et notamment de sécuriser l'accès au cockpit.

Le cockpit était, avant ces événements, séparé de la cabine passagers par une simple cloison de séparation munie d'une porte non blindée de cockpit.

Pour résister aux projectiles émis par des armes légères, la porte de cockpit, et éventuellement la cloison de séparation, ont été blindées.

Il reste toutefois important d'éviter l'intrusion dans le cockpit de toute personne non habilitée, notamment lors d'une ouverture momentanée de la porte de cockpit.

Il est en effet fréquent, au cours d'un vol, que des membres de l'équipage aient à sortir du cockpit ou à entrer dans celui-ci. La porte de cockpit est alors momentanément ouverte et une personne malveillante peut alors entrer de force dans le cockpit.

Il est possible de disposer un sas de sécurité entre le cockpit et la cabine passagers.

Le document FR2910436, déposé au nom de la demanderesse, décrit un sas de sécurité formé d'un couloir fermé en une extrémité par la porte pivotante du cockpit et en une seconde extrémité opposée par une seconde porte pivotante. Le couloir forme alors, entre lesdites portes, une zone de transition entre le cockpit et la cabine passagers.

Cette solution présente cependant l'inconvénient de nécessiter un espace dédié important, par suite de l'encombrement des portes pivotantes, réduisant ainsi la zone utile de la cabine passagers. Par zone utile, on entend ici l'espace effectivement disponible pour le transport de passagers.

En effet, l'espace dédié est formé de l'espace du couloir, ainsi que de l'espace nécessaire au débattement normal de la seconde porte. Dans le cas où la seconde porte s'ouvre à l'intérieur de la zone de transition, la longueur du couloir est alors fixée par la nécessité de permettre à ladite porte de pivoter normalement. Dans le cas contraire où la seconde porte pivote à l'extérieur de la zone de transition, donc dans la cabine passagers, la zone utile de la cabine passagers est diminuée de la zone de débattement de ladite porte. Dans les deux cas, ce sas de sécurité présente un encombrement important qui diminue la zone utile de la cabine passagers. Cela contrevient à l'exigence actuelle dans le domaine de l'aéronautique de maximiser la zone de cabine passagers dans le but de pouvoir transporter un plus grand nombre de passagers.

Une autre solution est décrite dans le document EP1332965, déposé au nom de la demanderesse. Le sas de sécurité est formé d'un tambour cylindrique de révolution monté tournant suivant un axe vertical sur une structure formant bâti. Le tambour délimite alors une zone intérieure formant zone de transition. Ledit bâti présente une forme annulaire cylindrique de révolution qui permet de loger le tambour. Le bâti comporte au moins deux ouvertures de type encadrement de porte, l'une côté cockpit et l'autre côté cabine passagers. Le tambour comporte une unique ouverture. Le tambour est rotatif de sorte que l'ouverture du tambour peut venir en regard de l'une ou l'autre desdites ouvertures du bâti.

Cependant, cette solution présente également certains inconvénients en termes d'encombrement et de sécurité.

Bien que le sas de sécurité à tambour selon ce second document ne présente pas de portes pivotantes, l'encombrement reste important du fait que la distance entre les deux ouvertures du bâti est imposée par la taille du tambour, et notamment son diamètre. Cette distance est alors de l'ordre du diamètre extérieur du tambour. La surface de la zone de transition est alors également imposée par la forme cylindrique du tambour et du bâti. Le sas de sécurité présente donc un encombrement important préjudiciable pour la zone utile de la cabine passagers.

Par ailleurs, le sas selon ce document comporte nécessairement une structure additionnelle formant bâti présentant une forme de cylindre permettant d'une part de loger le tambour et d'autre part de coopérer avec celui-ci pour réaliser la fonction technique de sas de sécurité. La présence de cette structure entraîne un encombrement supplémentaire ainsi qu'un ajout de masse préjudiciable pour les performances de l'aéronef.

Enfin, le sas de sécurité selon ce document présente un défaut de sécurité. En effet, lorsqu'une personne souhaite accéder au cockpit, elle doit être présente dans la zone de transition du tambour pour en faire la demande. Lorsque la demande est validée, le tambour tourne pour venir mettre son ouverture en regard de l'ouverture du cockpit. Cependant, il existe un laps de temps pendant lequel, alors que la demande d'accès au cockpit est validée, l'ouverture du tambour est au moins en partie en regard de l'ouverture du bâti côté cabine passagers. Pendant ce laps de temps, le passage d'une personne non habilitée de la cabine passagers à la zone de transition du tambour reste possible, ce qui est particulièrement préjudiciable pour la sécurité du cockpit.

Les documents US 2003/169184 A1 et US 2005/116098 décrivent chacun un sas de sécurité présentant une zone de transition délimitée conjointement par un élément mobile et par des parois fixes adjacentes à l'élément mobile. Dans chacun de ces documents, l'élément mobile en position de fermeture s'étend sur une partie du contour de la zone de transition, tandis que les parois fixes adjacentes s'étendent sur le reste de ce contour.

Ainsi, lorsque l'élément mobile est en position d'ouverture, les parois fixes continuent de matérialiser une partie du contour de la zone de transition, et continuent donc de délimiter partiellement la zone de transition.

### EXPOSÉ DE L'INVENTION

L'invention a principalement pour but de présenter une partie avant de fuselage d'aéronef comportant un accès sécurisé entre le cockpit et la cabine passagers, tout en présentant un encombrement réduit.

Pour ce faire, l'invention a pour objet une partie avant de fuselage d'aéronef comportant un cockpit de pilotage, une cabine accessible aux passagers séparée dudit cockpit par une cloison munie d'une porte de cockpit, et des moyens de séparation situés du côté de la cabine passagers par rapport à ladite cloison et comprenant au moins un élément mobile.

Par cockpit, on entend ici la zone de l'aéronef correspondant au poste de pilotage. Le cockpit comporte notamment les sièges des pilotes ainsi que les moyens de commande de l'aéronef.

Par cabine passagers, on entend ici la zone de l'aéronef accessible aux passagers, et comportant notamment les sièges permettant d'accueillir les passagers pendant les phases de vol.

Selon l'invention, ledit élément mobile est apte à être déplacé par coulissement entre:
- une position déployée de fermeture dans laquelle lesdits moyens de séparation délimitent, avec ladite porte de cockpit, une zone de transition entre le cockpit et la cabine passagers, et empêchent tout passage de personnes entre la cabine passagers et ladite zone de transition ; et
- une position rétractée d'ouverture dans laquelle lesdits moyens de séparation permettent le passage de personnes entre la cabine passagers et ladite zone de transition.

De plus, ledit élément mobile s'étend, en position déployée de fermeture, suivant tout le contour de la zone de transition jouxtant la cabine passagers.

Ainsi, un sas de sécurité peut être formé entre le cockpit et la cabine passagers.

Le sas comporte alors la porte de cockpit et les moyens de séparation. La zone de transition est une zone temporaire dans la mesure où son contour est défini lorsque l'élément mobile des moyens de séparation occupe la position déployée de fermeture.

A la différence des exemples de l'art antérieur précédemment décrits, la distance minimale entre la porte de cockpit et les moyens de sécurité lorsque ledit élément mobile est en position déployée de fermeture n'est pas imposée par la structure ou les moyens du sas de sécurité.

En effet, l'élément mobile des moyens de séparation est rétractable et déployable en coulissement. Il ne présente donc pas de zone de débattement inhérente à toute porte pivotante.

De plus, la distance minimale entre ledit élément mobile et ladite porte de cockpit n'est pas non plus imposée par une éventuelle structure annulaire formant bâti telle que celle décrite dans le second exemple de l'art antérieur précédemment décrit.

Ainsi, à la différence des exemples de l'art antérieur mentionnés précédemment, la distance entre la porte de cockpit et l'élément mobile en position déployée de fermeture peut donc être optimisée et diminuée au strict nécessaire, par exemple à la distance nécessaire permettant à une personne de se tenir dans la zone de transition ainsi définie. La surface de la zone de transition est alors minimisée, ce qui procure un encombrement particulièrement réduit du sas de sécurité et permet d'obtenir en conséquence une importante zone utile de la cabine passagers.

Par ailleurs, le sas de sécurité ne présente pas de structure additionnelle formant bâti et présentant une ouverture de cockpit et une ouverture de cabine passagers. L'invention permet ainsi de réaliser un gain de masse particulièrement avantageux pour les performances de l'aéronef. L'intégration du sas de sécurité dans la structure globale des parties avant classiques d'aéronef peut également être réalisée simplement, sans compliquer les chaînes d'assemblage et les procédures de fabrication.

Enfin, le sas de sécurité présente un niveau de sécurité élevé dans la mesure où l'actionnement des moyens de sécurité est indépendant de celui de la porte de cockpit. A la différence du second exemple de l'art antérieur, le sas de sécurité selon l'invention ne présente pas de laps de temps pendant lequel une personne non habilitée pourrait s'introduire indûment à l'intérieur du sas, alors que l'élément mobile serait en cours de mouvement de fermeture. En effet, lorsqu'une personne est présente dans le sas et fait une demande d'accès au cockpit, l'élément mobile vient occuper, avant toute validation de la demande, la position déployée de fermeture. Ainsi, la sécurité du cockpit est assurée à tout instant.

La zone de transition comporte un plancher. De préférence, le plancher est commun avec celui de la cabine passagers, et avec celui du cockpit.

Selon un premier mode de réalisation, ledit élément mobile est coulissant suivant un axe parallèle audit plancher.

Selon un second mode de réalisation, ledit élément mobile est coulissant suivant un axe orthogonal audit plancher.

Avantageusement, ledit élément mobile reste intégralement localisé, lors de son déplacement entre l'une et l'autre desdites positions, suivant le contour de la zone de transition jouxtant la cabine passagers.

Par contour de la zone de transition jouxtant la cabine passagers, on entend la ligne suivant laquelle s'étendent les moyens de séparation lorsque ledit élément mobile occupe la position déployée de fermeture. La surface de la zone de transition est définie par la surface délimitée par la porte de cockpit d'une part et les moyens de séparation lorsque ledit élément mobile occupe la position déployée de fermeture d'autre part, et obtenue suivant une section parallèle au plan du plancher du sas de sécurité. Le plan du plancher du sas de sécurité est défini comme étant un plan orthogonal au plan de symétrie de l'aéronef.

Avantageusement, lesdits moyens de séparation, lorsque ledit élément mobile occupe ladite position rétractée d'ouverture, délimitent avec ladite porte du cockpit au moins partiellement une zone présentant une surface strictement inférieure à celle de la zone de transition.

La surface de ladite zone définie lorsque ledit élément mobile occupe la position rétractée d'ouverture peut être sensiblement nulle ou négligeable.

La zone de transition est donc bien une zone temporaire dans la mesure où son contour est défini lorsque l'élément mobile occupe la position déployée de fermeture.

La cabine passagers présente ainsi un espace maximisé puisque la surface de la zone destinée à former la zone de transition est faible voire négligeable lorsque l'élément mobile est rétracté.

Ledit élément mobile peut être formé d'un panneau réalisé d'un seul tenant, d'une pluralité de panneaux où chacun desdits panneaux est couplé à au moins un panneau voisin, voire d'une grille ou d'un rideau.

Par panneau, on entend une plaque ou une planche de forme générale sensiblement rectangulaire. Par panneau voisin, on entend un panneau adjacent au panneau considéré. Par panneaux couplés l'un à l'autre, on entend des panneaux reliés l'un à l'autre par une liaison mécanique. Ainsi, chaque panneau de ladite pluralité de panneaux peut être relié au(x) panneau(x) voisin(s) par tout type de liaison mécanique, par exemple une liaison pivot ou glissière. Par ailleurs, la pluralité de panneaux comprend au moins deux panneaux.

Par grille, on entend un treillis de barreaux en matériau métallique ou en matériau plastique de haute résistance, les barreaux étant reliés deux à deux par une liaison mécanique de type, par exemple, pivot.

Selon une possibilité de réalisation, le plancher de la zone de transition sépare une zone supérieure de transport de passagers d'une zone inférieure dite cargo. La zone cargo est disposée sous la cabine passagers suivant un axe orthogonal au plancher. Ledit plancher comporte une ouverture qui s'étend suivant le contour de la zone de transition jouxtant la cabine passagers. Ledit élément mobile est alors apte à coulisser au travers de ladite ouverture de manière à loger, en position rétractée de fermeture, dans ladite zone inférieure cargo. L'encombrement du sas de sécurité est alors minimal dans la mesure où ledit élément mobile, en position rétractée d'ouverture, n'est pas présent au niveau de la cabine passagers.

Avantageusement, pour améliorer la sécurisation de l'accès au cockpit, lesdits moyens de séparation sont blindés. La porte de cockpit et la cloison entre le cockpit et la cabine passagers peuvent également être blindés. Le blindage permet notamment de résister aux impacts de projectiles d'armes à feu.

L'invention porte également sur un aéronef comportant une partie avant de fuselage selon l'une quelconque des caractéristiques décrites précédemment.

D'autres avantages et caractéristiques de l'invention apparaîtront dans la description détaillée non limitative ci-dessous.

### BRÈVE DESCRIPTION DES DESSINS

On décrira à présent, à titre d'exemples non limitatifs, des modes de réalisation de l'invention, en se référant aux dessins annexés, dans lesquels:
La figure 1 est une vue schématique en coupe d'une partie avant de fuselage d'aéronef comportant un sas de sécurité entre la cabine passagers et le cockpit;
La figure 2 est une vue schématique en coupe d'une partie avant de fuselage d'aéronef comportant un sas de sécurité décrit à titre d'information ;
La figure 3 est une vue schématique en perspective du sas de sécurité représenté sur la figure 2 ;
La figure 4 est une vue schématique en perspective d'un sas de sécurité selon un mode de réalisation de l'invention ;
La figure 5 est une vue schématique en perspective d'un sas de sécurité décrit à titre d'information.

### EXPOSÉ DÉTAILLÉ D'UN MODE DE RÉALISATION PRÉFÉRÉ

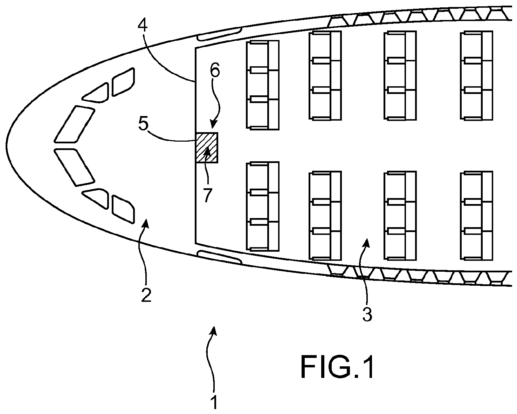

La figure 1 illustre de manière schématique une partie avant 1 de fuselage d'aéronef comportant un sas de sécurité d'accès au cockpit. La partie avant 1 comporte un cockpit 2 séparé d'une cabine passagers 3 par une cloison 4 munie d'une porte de cockpit 5. Cette partie avant 1 est tout à fait classique. Il n'est donc pas nécessaire de la décrire dans le détail.

La porte de cockpit 5 est montée pivotante sur ladite cloison 4 et présente un débattement de pivotement qui peut être côté cockpit ou côté cabine passagers. Elle peut être blindée, tout comme la cloison, pour résister aux impacts de projectiles d'armes à feu.

Le sas de sécurité 6 assure la communication entre le cockpit 2 et la cabine passagers 3. Il comporte, outre la porte de cockpit 5, des moyens de séparation situés du côté de la cabine passagers 3 par rapport à ladite cloison 4 et comprenant au moins un élément mobile.

Ledit élément mobile est apte à être déplacé par coulissement entre:
- une position déployée de fermeture dans laquelle lesdits moyens de séparation délimitent, avec ladite porte de cockpit, une zone de transition 7 entre le cockpit 2 et la cabine passagers 3, et empêchent tout passage de personnes entre la cabine passagers 2 et ladite zone de transition 7 ; et
- une position rétractée d'ouverture dans laquelle lesdits moyens de séparation permettent le passage de personnes entre la cabine passagers 3 et ladite zone de transition 7.

Le sas de sécurité 6 définit ainsi une zone de transition 7 temporaire située entre le cockpit 2 et la cabine passagers 3. Cette zone de transition 7 est délimitée, d'une part vis-à-vis du cockpit 2, par la porte de cockpit 5, et d'autre part vis-à-vis de la cabine passagers 3, par les moyens de séparation lorsque ledit élément mobile occupe ladite position déployée de fermeture.

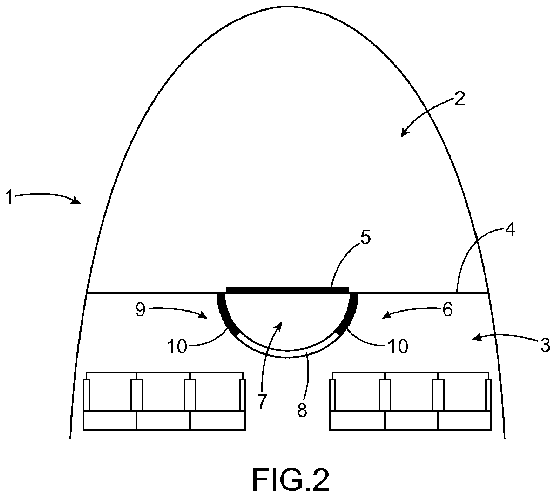

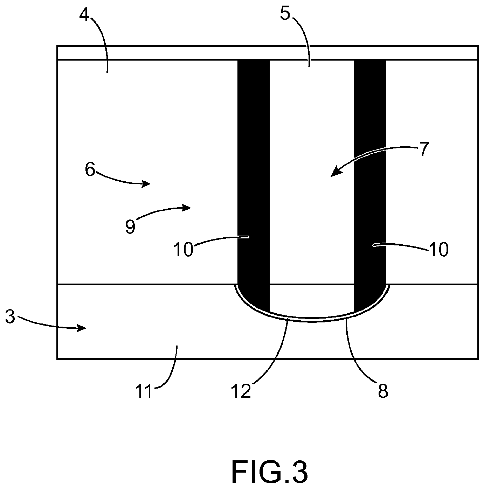

Les figures 2 et 3 illustrent, uniquement à titre informatif, une partie avant de fuselage d'aéronef, et plus particulièrement un sas de sécurité 6 comportant des moyens de séparation 9.

Le contour 8 de la zone de transition 7 du sas de sécurité 6 jouxtant la cabine passagers 3 présente une forme en arc de cercle.

Les moyens de séparation 9 comportent deux éléments mobiles 10 montés chacun coulissants suivant un axe ou un chemin parallèle au plan du plancher 11 sur une structure formant bâti. La structure formant bâti peut être le plancher 11 du sas et de la cabine passagers. Elle peut également être un plafond de sas et de cabine passagers (non représenté). Les éléments mobiles 10 sont coulissants dans des rails 12 de guidage montés sur ladite structure.

Chacun des éléments mobiles 10 se présente sous la forme d'un panneau 10 réalisé d'un seul tenant, de préférence blindé pour résister aux impacts des projectiles d'armes à feu.

Le chemin de coulissement s'étend suivant ledit contour 8 de la zone de transition 7 jouxtant la cabine passagers, et présente donc une forme d'arc de cercle.

Lorsque les panneaux 10 coulissants occupent la position rétractée d'ouverture, ils sont rabattus à proximité de la cloison de cockpit 4.

Dans cette position, les panneaux 10 coulissants sont logés chacun à l'intérieur d'un logement. Chacun desdits logements est, par exemple, un caisson creux disposé à proximité de la cloison de cockpit 4 et qui s'étend suivant une partie du contour 8 de la zone de transition 7 jouxtant la cabine passagers.

Ainsi, la zone formée entre le cockpit et la cabine passagers, et délimitée au moins partiellement par la porte de cockpit d'une part et par les panneaux 10 coulissants lorsqu'ils occupent la position rétractée d'ouverture d'autre part présente une surface strictement inférieure par rapport à celle de la zone de transition 7.

Cette surface est ici négligeable par rapport à la surface de la zone de transition 7.

La zone de transition 7 est donc bien une zone temporaire dans la mesure où son contour est défini lorsque les panneaux 10 coulissants occupent la position déployée de fermeture.

La cabine passagers présente ainsi un espace maximisé puisque la surface de la zone destinée à former la zone de transition 7 est faible voire négligeable lorsque les panneaux 10 sont rétractés.

Lorsque les panneaux 10 coulissants occupent ladite position déployée de fermeture, ils sont situés essentiellement à l'extérieur de leur logement respectif, éloignés de la cloison de cockpit 4.

Cependant, pour une meilleure sécurité, lesdits panneaux 10 coulissants comportent chacun une partie d'extrémité qui reste logée à l'intérieur du logement. Ainsi, il n'y a pas d'ouverture entre chacun des panneaux 10 coulissants et le logement associé. Cette ouverture formerait en effet un point faible du sas de sécurité 6.

Dans cette position déployée de fermeture, l'ensemble comprenant lesdits caissons formant logement et lesdits panneaux 10 coulissants occupent sensiblement tout le contour 8 de la zone de transition 7 jouxtant la cabine passagers 3. Ainsi, le passage d'une personne de la cabine passagers 3 à la zone de transition 7 est rendu impossible.

De préférence, lesdits logements sont également blindés pour résister aux impacts des projectiles des armes à feu.

Le fonctionnement du sas de sécurité 6 décrit ci-dessus à titre informatif est maintenant décrit.

Lorsque la porte de cockpit 5 est en position fermée, les panneaux 10 coulissants occupent la position rétractée d'ouverture.

Il est alors possible d'accéder, à partir de la cabine passagers 3, à la zone de transition 7 du sas de sécurité 6.

Ainsi, lorsqu'une personne souhaite accéder au cockpit, elle entre à l'intérieur du sas de sécurité 6 en passant de la cabine passagers 3 à la zone de transition 7.

Une demande d'accès à l'intérieur du cockpit 2 est alors formulée via un dispositif positionné à l'intérieur du sas 6.

Les panneaux 10 coulissants passent alors de la position rétractée d'ouverture à la position déployée de fermeture.

Lors de ce changement de position, les panneaux 10 coulissent intégralement le long du contour 8 de la zone de transition 7 jouxtant la cabine passagers 3.

Les panneaux 10 coulissants, en position déployée de fermeture, empêchent alors toute entrée d'une personne supplémentaire à l'intérieur du sas de sécurité 6.

La demande d'accès peut ensuite être validée pour obtenir l'ouverture de la porte de cockpit 5.

Elle peut être validée de manière automatique par la présentation d'une carte d'accès propre aux personnes habilitées. Elle peut également être validée par l'équipage présent à l'intérieur du cockpit 2, au moyen d'un dispositif de visualisation de type caméra ou fenêtre située dans la porte de cockpit 5.

Lorsque la demande est validée, la porte de cockpit 5 est déverrouillée et la personne présente dans le sas de sécurité 6 peut accéder au cockpit 2.

La porte de cockpit 5 est ensuite refermée et verrouillée. Les panneaux 10 coulissants passent alors de la position déployée de fermeture à la position rétractée d'ouverture.

La procédure de passage d'une personne de la cabine passagers 3 au cockpit 2 peut alors être renouvelée.

Dans le cas où une personne présente dans le cockpit 2 souhaite accéder à la cabine passagers 3, elle active un dispositif d'ouverture de porte de cockpit 5. Avant l'ouverture de la porte du cockpit 5, les panneaux 10 coulissants passent de leur position rétractée d'ouverture à la position déployée de fermeture.

La porte du cockpit 5 peut ainsi être ouverte, sans risque d'intrusion d'une personne non habilitée de la cabine passagers 3 au cockpit 2.

La personne entre dans la zone de transition 7 du sas de sécurité 6 et ferme la porte du cockpit 5.

Les panneaux 10 coulissants passent alors de la position déployée de fermeture à la position rétractée d'ouverture.

La personne peut ensuite accéder à la cabine passagers 3.

La procédure de passage d'une personne de la cabine passagers 3 au cockpit 2, ou inversement, peut alors être renouvelée.

Ainsi, il apparaît qu'à aucun moment de la procédure de passage d'une personne entre la cabine passagers 3 et le cockpit 2, une personne non habilitée peut s'introduire à l'intérieur du cockpit 2 à partir de la cabine passagers 3.

Par ailleurs, dans le cas d'une panne d'alimentation des panneaux 10 coulissants, celles-ci peuvent être actionnées manuellement, sans porter atteinte aux opérations de pilotage ou de service des passagers effectuées durant le vol.

Enfin, dans le cas où l'aéronef est dépourvu de passagers et qu'il n'y a aucun risque d'intrusion dans le cockpit d'une personne malveillante, le sas de sécurité 6 peut ne pas être actionné. Le passage de la cabine passagers 3 au cockpit 2 et inversement se fait simplement par la porte du cockpit 5, ledit élément mobile 10 restant en position rétractée d'ouverture.

En variante, les moyens de séparation 9 ne comportent qu'un seul panneau 10 coulissant similaire à l'un de ceux décrits précédemment. La largeur du panneau 10 coulissant et celle du caisson formant logement sont donc adaptées, de sorte que, lorsque le panneau 10 coulissant est en position déployée de fermeture, il empêche, en coopération avec son caisson formant logement, le passage de personnes entre la zone de transition 7 et la cabine passagers 3.

Lors du passage de la position rétractée à la position déployée, et inversement, le panneau 10 coulissant reste localisé au niveau du contour 8 de la zone de transition 7 jouxtant la cabine passagers 3.

Le fonctionnement du sas de sécurité 6 comportant un seul panneau 10 coulissant selon cette variante est similaire à celui décrit ci-dessus.

Une deuxième variante (non représentée) est maintenant décrite.

Selon cette variante, chacun des éléments mobiles coulissants est formé d'une pluralité de panneaux coulissants où chaque panneau est couplé à son ou ses panneau(x) voisin(s) par une liaison mécanique, par exemple pivot ou glissière. Chaque panneau est ainsi couplé à ses voisins immédiats, de sorte que le déplacement de l'un entraîne le déplacement des autres.

Les panneaux sont montés coulissants sur ladite structure formant bâti par l'intermédiaire des rails de guidage.

Chaque panneau présente alors une forme d'arc de cercle.

Lorsque les éléments coulissants occupent la position rétractée d'ouverture, les panneaux sont disposés à l'intérieur des caissons formant logement.

Pour limiter l'encombrement suivant le contour de la zone de transition jouxtant la cabine passagers, les panneaux sont alors disposés de manière à se chevaucher mutuellement.

Lorsque les éléments coulissants occupent la position déployée de fermeture, les panneaux sont dépliés et s'étendent le long du contour de la zone de transition jouxtant la cabine passagers.

Comme pour les différents exemples décrits précédemment, lors du passage de la position rétractée à la position déployée, et inversement, les panneaux coulissants peuvent rester localisés au niveau du contour défini entre la zone de transition et la cabine passagers.

Le fonctionnement du sas de sécurité comportant des éléments coulissants selon cette variante est similaire à celui décrit précédemment.

Bien entendu, dans le cadre des exemples décrits ci-dessus et de l'invention décrite ci-dessous, il est possible de ne prévoir qu'un seul élément mobile formé d'une pluralité de panneaux où chaque panneau est couplé à son ou ses panneau(x) voisin(s). Par ailleurs, et selon une autre variante, ledit ou les élément(s) mobile(s) peut(peuvent) être formé(s) d'une grille, par exemple métallique. Par mesure de sécurité, la grille est blindée et présente un maillage suffisamment fin pour stopper les projectiles d'armes à feu. Alternativement, ledit ou les élément(s) mobile(s) peut(peuvent) être formé(s) d'un rideau métallique, de préférence à lames pleines et blindés.

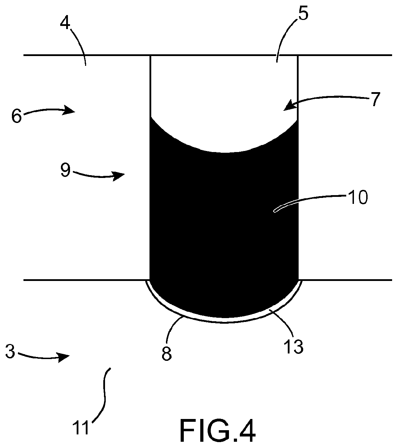

Selon un mode de réalisation de l'invention illustré sur la figure 4, l'élément mobile 10 des moyens de séparation 9 peut être formé d'un panneau 10 unique réalisé d'un seul tenant monté coulissant suivant un axe sensiblement orthogonal au plancher 11 du sas.

Le plancher 11 de la zone de transition 7 sépare une zone supérieure de transport de passagers d'une zone inférieure dite cargo. La zone cargo est disposée sous la zone passagers suivant un axe orthogonal au plancher.

Ledit plancher 11 comporte une ouverture 13 qui s'étend suivant le contour 8 de la zone de transition 7 jouxtant la cabine passagers 3.

Ledit panneau 10 peut alors coulisser au travers de ladite ouverture 13 de manière à loger, en position rétractée de fermeture, dans ladite zone inférieure cargo. L'encombrement du sas de sécurité 6 est alors minimal dans la mesure où ledit panneau 10 coulissant, en position rétractée d'ouverture, n'est pas présent au niveau de la cabine passagers 3.

Ainsi, la zone formée entre le cockpit et la cabine passagers, et délimitée au moins partiellement par la porte de cockpit d'une part et par le panneau 10 coulissant lorsqu'il occupe la position rétractée d'ouverture d'autre part, présente une surface strictement inférieure par rapport à celle de la zone de transition 7.

Cette surface est ici sensiblement nulle ou négligeable.

La cabine passagers présente bien un espace maximisé puisque la surface de la zone destinée à former la zone de transition 7 est faible voire négligeable lorsque le panneau 10 est rétracté.

Pour passer en position déployée de fermeture, le panneau 10 coulissant effectue une translation verticale vers le haut, c'est-à-dire de la soute cargo au sas de sécurité 6. Il est ensuite situé au niveau de tout le contour 8 de la zone de transition 7 jouxtant la cabine passagers 3.

Comme pour les différents exemples précédemment décrits, lors du passage de la position rétractée à la position déployée, le panneau 10 coulissant reste avantageusement localisé au niveau dudit contour 8.

Le fonctionnement du sas de sécurité 6 comportant un panneau 10 à coulissement vertical est similaire à celui décrit précédemment.

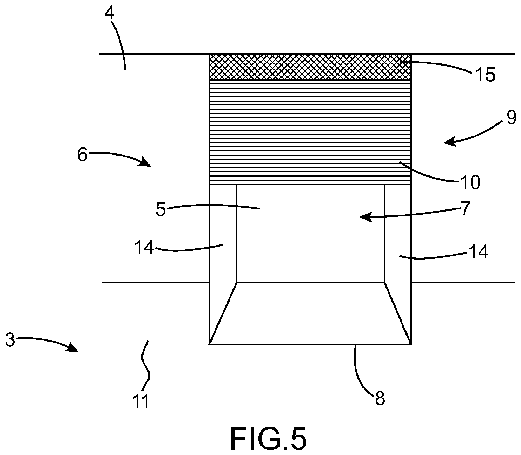

Dans des variantes de réalisation de l'invention et dans un autre exemple décrit à titre informatif et représenté sur la figure 5, l'élément mobile 10 des moyens de séparation 9 est formé d'une pluralité de panneaux où chaque panneau est couplé à son ou ses panneau(x) voisin(s) de manière à former un volet 10 coulissant. Le volet coulissant peut également être formé d'une grille blindée et présentant un maillage suffisamment fin pour stopper les projectiles d'armes à feu. Alternativement, ledit volet peut être formé d'un rideau métallique, de préférence à lames pleines et blindés.

Dans l'exemple décrit à titre informatif et représenté sur la figure 5, les moyens de séparation 9 comprennent en outre deux parois 14 latérales s'étendant à partir de la cloison de cockpit 4 suivant une partie du contour 8 de la zone de transition 7 jouxtant la cabine passagers 3.

Le volet 10 est monté roulant sur un tambour disposé dans un caisson 15 formant logement.

Le caisson 15 formant logement peut être disposé au niveau du plancher du sas ou au niveau du plafond de celui-ci. La figure 5 illustre ce dernier mode de réalisation.

Dans le premier cas, le volet 10 passe de la position rétractée d'ouverture à la position déployée de fermeture par un déploiement vertical vers le haut, c'est-à-dire du plancher du sas au plafond de celui-ci.

Dans le second cas (illustré sur la figure 5), le volet 10 passe de la position rétractée d'ouverture à la position déployée de fermeture par un déploiement en coulissement vertical vers le bas, c'est-à-dire du plafond du sas au plancher de celui-ci. Plus précisément, le volet coulisse le long de rails de guidage montés sur les parois 14 latérales.

Comme pour les différents exemples décrits précédemment, lors du passage de la position rétractée à la position déployée, et inversement, le volet 10 roulant et coulissant reste avantageusement localisé au niveau du contour 8 de la zone de transition 7 jouxtant la cabine passagers 3.

Le fonctionnement du sas de sécurité 6 selon cette variante est similaire à celui décrit précédemment en référence au premier exemple.

Par ailleurs, il est également possible que les éléments mobiles des moyens de séparation soient formés de deux volets roulants, l'un et l'autre étant logés, en position rétractée, dans des caissons formant logement disposés, respectivement, au niveau du plafond du sas et au niveau du plancher du sas.

Bien entendu, diverses modifications peuvent être apportées par l'homme du métier à l'invention qui vient d'être décrite, uniquement à titre d'exemples non limitatifs.

Par ailleurs, la zone de transition 7 peut présenter une forme de demi-disque, carrée, rectangulaire ou autre.

## Revendications

1. Partie avant (1) de fuselage d'aéronef comportant un cockpit de pilotage (2), une cabine (3) accessible aux passagers séparée dudit cockpit (2) par une cloison (4) munie d'une porte du cockpit (5), et des moyens de séparation (9) situés du côté de la cabine passagers (3) par rapport à ladite cloison (4) et comprenant au moins un élément mobile (10), ledit élément mobile (10) étant apte à être déplacé par coulissement entre:
- une position déployée de fermeture dans laquelle lesdits moyens de séparation (9) délimitent, avec ladite porte du cockpit (5), une zone de transition (7) entre le cockpit (2) et la cabine passagers (3), et empêchent tout passage de personnes entre la cabine passagers (3) et ladite zone de transition (7) ; et
- une position rétractée d'ouverture dans laquelle lesdits moyens de séparation (9) permettent le passage de personnes entre la cabine passagers (3) et ladite zone de transition (7) ;
**caractérisée en ce que** ledit élément mobile (10) s'étend, en position déployée de fermeture, suivant tout le contour (8) de la zone de transition (7) jouxtant la cabine passagers (3).

2. Partie avant (1) de fuselage d'aéronef selon la revendication 1, **caractérisée en ce que** lesdits moyens de séparation (9), lorsque ledit élément mobile (10) occupe ladite position rétractée d'ouverture, délimitent avec ladite porte du cockpit (5) au moins partiellement une zone présentant une surface strictement inférieure à celle de la zone de transition (7).

3. Partie avant (1) de fuselage d'aéronef selon la revendication 1 ou 2, **caractérisée en ce que** la zone de transition (7) comporte un plancher (11), ledit élément mobile (10) étant coulissant suivant un axe parallèle ou orthogonal audit plancher (11).

4. Partie avant (1) de fuselage d'aéronef selon l'une quelconque des revendications 1 à 3, **caractérisée en ce que** ledit élément mobile (10) reste intégralement localisé, lors de son déplacement entre l'une et l'autre desdites positions, suivant le contour (8) de la zone de transition (7) jouxtant la cabine passagers (3).

5. Partie avant (1) de fuselage d'aéronef selon l'une quelconque des revendications 1 à 4, **caractérisée en ce que** ledit élément mobile (10) est formé d'un panneau réalisé d'un seul tenant.

6. Partie avant (1) de fuselage d'aéronef selon l'une quelconque des revendications 1 à 4, **caractérisée en ce que** ledit élément mobile (10) est formé d'une pluralité de panneaux, chacun desdits panneaux étant couplé à au moins un panneau voisin.

7. Partie avant (1) de fuselage d'aéronef selon l'une quelconque des revendications 1 à 4, **caractérisée en ce que** ledit élément mobile (10) est formé d'une grille ou d'un rideau.

8. Partie avant (1) de fuselage d'aéronef selon l'une quelconque des revendications 1 à 7, **caractérisée en ce que** la zone de transition (7) comporte un plancher (11), ledit plancher (11) séparant une zone supérieure de transport de passagers d'une zone inférieure dite cargo, et comportant une ouverture (13) qui s'étend suivant le contour (8) de la zone de transition (7) jouxtant la cabine passagers (3), et **en ce que** ledit élément mobile (10) est apte à coulisser au travers de ladite ouverture (13) de manière à loger, en position rétractée de fermeture, dans ladite zone inférieure cargo.

9. Aéronef, **caractérisé en ce qu'**il comporte une partie avant (1) de fuselage selon l'une quelconque des revendications précédentes.

## Patentansprüche

1. Vorderteil (1) eines Flugzeugrumpfes, welcher ein Cockpit (2), eine für die Passagiere zugängliche Kabine (3), die vom Cockpit (2) durch eine mit einer Cockpittür (5) versehene Zwischenwand (4) getrennt ist, und Trennmittel (9) umfasst, die sich bezüglich der Zwischenwand (4) auf der Seite der Passagierkabine (3) befinden und wenigstens ein bewegliches Element (10) umfassen, wobei das bewegliche Element (10) geeignet ist, durch Verschieben bewegt zu werden zwischen:
- einer ausgezogenen Schließstellung, in welcher die Trennmittel (9) mit der Cockpittür (5) einen Übergangsbereich (7) zwischen dem Cockpit (2) und der Passagierkabine (3) begrenzen und jeden Durchgang von Personen zwischen der Passagierkabine (3) und dem Übergangsbereich (7) verhindern;
- einer zurückgezogenen Öffnungsstellung, in welcher die Trennmittel (9) den Durchgang von Personen zwischen der Passagierkabine (3) und dem Übergangsbereich (7) ermöglichen;
**dadurch gekennzeichnet, dass** sich das bewegliche Element (10) in der ausgezogenen Schließstellung entlang des gesamten Umfangs (8) des Übergangsbereichs (7), der an die Passagierkabine (3) angrenzt, erstreckt.

2. Vorderteil (1) eines Flugzeugrumpfes nach Anspruch 1, **dadurch gekennzeichnet, dass** die Trennmittel (9), wenn das bewegliche Element (10) die zurückgezogene Öffnungsstellung einnimmt, mit der Cockpittür (5) wenigstens teilweise einen Bereich begrenzen, der eine Fläche aufweist, die streng kleiner als diejenige des Übergangsbereichs (7) ist.

3. Vorderteil (1) eines Flugzeugrumpfes nach Anspruch 1 oder 2, **dadurch gekennzeichnet, dass** der Übergangsbereich (7) einen Fußboden (11) aufweist, wobei das bewegliche Element (10) entlang einer Achse gleitend ist, die parallel oder senkrecht zu dem Boden (11) ist.

4. Vorderteil (1) eines Flugzeugrumpfes nach einem der Ansprüche 1 bis 3, **dadurch gekennzeichnet, dass** das bewegliche Element (10) bei seiner Bewegung zwischen der einen und der anderen der Stellungen vollständig entlang des Umfangs (8) des Übergangsbereichs (7), der an die Passagierkabine (3) angrenzt, angeordnet bleibt.

5. Vorderteil (1) eines Flugzeugrumpfes nach einem der Ansprüche 1 bis 4, **dadurch gekennzeichnet, dass** das bewegliche Element (10) von einer Platte gebildet wird, die aus einem Stück hergestellt ist.

6. Vorderteil (1) eines Flugzeugrumpfes nach einem der Ansprüche 1 bis 4, **dadurch gekennzeichnet, dass** das bewegliche Element (10) von mehreren Platten gebildet wird, wobei jede der Platten mit wenigstens einer benachbarten Platte verbunden ist.

7. Vorderteil (1) eines Flugzeugrumpfes nach einem der Ansprüche 1 bis 4, **dadurch gekennzeichnet, dass** das bewegliche Element (10) von einem Gitter oder von einem Vorhang gebildet wird.

8. Vorderteil (1) eines Flugzeugrumpfes nach einem der Ansprüche 1 bis 7, **dadurch gekennzeichnet, dass** der Übergangsbereich (7) einen Fußboden (11) aufweist, wobei der Fußboden (11) einen oberen Passagierbeförderungsbereich von einem Frachtbereich genannten unteren Bereich trennt und eine Öffnung (13) aufweist, die sich entlang des Umfangs (8) des Übergangsbereichs (7), der an die Passagierkabine (3) angrenzt, erstreckt, und dadurch, dass das bewegliche Element (10) geeignet ist, durch die Öffnung (13) hindurch zu gleiten, sodass es in der zurückgezogenen Schließstellung in dem unteren Frachtbereich verstaut ist.

9. Flugzeug, **dadurch gekennzeichnet, dass** es ein Vorderteil (1) eines Flugzeugrumpfes nach einem der vorhergehenden Ansprüche umfasst.

## Claims

1. An aircraft fuselage nose section (1) including a cockpit (2), a cabin (3) accessible to passengers which is separated from said cockpit (2) by a partition wall (4) provided with a cockpit door (5), and separating means (9) located on the passenger cabin (3) side with respect to said partition wall (4) and comprising at least one movable element (10), said movable element (10) being slidingly movable between:
- an extended closing position wherein said separating means (9) bound, with said cockpit door (5), a transition zone (7) between the cockpit (2) and the passenger cabin (3), and prevent people from passing between the passenger cabin (3) and said transition zone (7); and
- a retracted opening position wherein said separating means (9) allow people to pass between the passenger cabin (3) and said transition zone (7);
**characterised in that** said movable element (10) extends, in the extended closing position, along the entire perimeter (8) of the transition zone (7) adjoining the passenger cabin (3).

2. The aircraft fuselage nose section (1) according to claim 1, **characterised in that**, when said movable element (10) assumes said retracted opening position, said separation means (9) bound with said cockpit door (5) at least partly a zone having an area strictly lower than that of the transition zone (7).

3. The aircraft fuselage nose section (1) according to claim 1 or 2, **characterised in that** the transition zone (7) includes a floor (11), said movable element (10) being slidable along an axis parallel or orthogonal to said floor (11).

4. The aircraft fuselage nose section (1) according to any of claims 1 to 3, **characterised in that** said movable element (10) remains fully located, during its displacement between both said positions, along the perimeter (8) of the transition zone (7) adjoining the passenger cabin (3).

5. The aircraft fuselage nose section (1) according to any of claims 1 to 4, **characterised in that** said movable element (10) is formed by a panel made as a single piece.

6. The aircraft fuselage nose section (1) according to any of claims 1 to 4, **characterised in that** said movable element (10) is formed by a plurality of panels, each of said panels being coupled to at least one contiguous panel.

7. The aircraft fuselage nose section (1) according to any of claims 1 to 4, **characterised in that** said movable element (10) is formed by a grid or curtain.

8. The aircraft fuselage nose section (1) according to any of claims 1 to 7, **characterised in that** said transition zone (7) includes a floor (11), said floor (11) separating a passenger transport upper zone from a so-called cargo lower zone, and including an opening (13) which extends along the perimeter (8) of the transition zone (7) adjoining the passenger cabin (3), and **in that** said movable element (10) is slidable through said opening (13) so as to be accommodated, in the closing retracted position, in said cargo lower zone.

9. An aircraft, **characterised in that** it includes a fuselage nose section (1) according to any of the preceding claims.
